(19) Europäisches Patentamt
European Patent Office
Office européen des brevets

(11) **EP 4 681 815 A1**

(12) **EUROPEAN PATENT APPLICATION**
published in accordance with Art. 153(4) EPC

(43) Date of publication:
**21.01.2026 Bulletin 2026/04**

(21) Application number: 23927702.3

(22) Date of filing: **15.09.2023**

(51) International Patent Classification (IPC):
**B01J 21/16** (2006.01)   **B01J 23/04** (2006.01)
**B01J 23/46** (2006.01)   **B01J 37/02** (2006.01)
**B01J 37/16** (2006.01)   **C01B 3/04** (2026.01)

(52) Cooperative Patent Classification (CPC):
**B01J 21/16; B01J 23/04; B01J 23/46; B01J 37/02; B01J 37/16; C01B 3/04;** Y02E 60/36

(86) International application number:
**PCT/KR2023/013894**

(87) International publication number:
**WO 2024/190982 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.03.2023 KR 20230033467**

(71) Applicant: HD Hyundai Oilbank Co., Ltd.
**Seosan-si, Chungcheongnam-do 31902 (KR)**

(72) Inventors:
• **KIM, Myoung Yeob**
**Seongnam-si, Gyeonggi-do 13627 (KR)**
• **KIM, Jin Sung**
**Suwon-si, Gyeonggi-do 16514 (KR)**
• **JIN, Min Gyu**
**Yongin-si, Gyeonggi-do 16902 (KR)**
• **LEE, Ho In**
**Yongin-si, Gyeonggi-do 17066 (KR)**

(74) Representative: **Schwarz & Partner Patentanwälte GmbH**
**Patentanwälte**
**Wipplingerstraße 30**
**1010 Wien (AT)**

(54) **CATALYST FOR DEHYDROGENATION OF AMMONIA, MANUFACTURING METHOD THEREFOR, AND METHOD FOR PRODUCING HYDROGEN USING SAME**

(57) Disclosed are a catalyst for the dehydrogenation of ammonia, a manufacturing method therefor, and a method for producing hydrogen using same. The disclosed catalyst for the dehydrogenation of ammonia comprises clay and an alkali metal and ruthenium impregnated in the clay.

EP 4 681 815 A1

# EP 4 681 815 A1

**Description**

[Technical Field]

The present disclosure relates to a catalyst for ammonia dehydrogenation, a method of preparing the same, and a method of preparing hydrogen using the same. More specifically, the present disclosure relates to a catalyst for ammonia dehydrogenation capable of preparing hydrogen at a high yield from ammonia, a method of preparing the same, and a method of preparing hydrogen using the same.

[Background Art]

Recently, global interest in the production and utilization of hydrogen energy (blue and green hydrogen) as a sustainable and eco-friendly alternative energy source that does not emit carbon dioxide has been increasing.

Methods of preparing hydrogen energy include green hydrogen production through water electrolysis and pink hydrogen production based on nuclear power. In particular, ammonia is not only a hydrogen carrier but is also useful as energy itself. In addition, hydrogen may be prepared from ammonia through dehydrogenation using an appropriate catalyst.

The preparation of hydrogen from ammonia using the methods described above may be applied to the following fields. First, oil refineries such as Hyundai Oilbank are planning to modify and supplement existing gas stations that already provide gasoline, diesel, and LPG, and create future gas stations (composite energy stations) that provide all types of transportation fuel and energy, including hydrogen and electric charging, in one place. In particular, when "hydrogen-based vehicles using fuel cells" and the like currently under development by Hyundai Motors are commercialized, oil refineries are expected to supply hydrogen to the aforementioned future gas stations, and therefore, hydrogen prepared from ammonia is expected to be supplied to gas stations and used as a raw material for fuel cells. In addition, the oil refining and petrochemical industries require a large amount of hydrogen when producing various products. When environmentally friendly hydrogen that is prepared through the ammonia dehydrogenation process and thus does not emit carbon dioxide is used, rather than hydrogen prepared through a process of emitting a significant amount of carbon dioxide, such as the conventional steam methane reforming process for natural gas reforming, it is expected that the effect of reducing carbon dioxide emissions can be achieved. In addition, the use of hydrogen produced through the ammonia dehydrogenation reaction for power generation can also be considered. Ammonia itself is a raw material to generate electricity and may be used to produce energy without emitting carbon dioxide through combustion. However, ammonia has deep-seated problems due to unique characteristics such as calorific value and difficulty in ignition. To solve these problems, a method of converting only a part of ammonia into hydrogen and then producing energy through ammonia-hydrogen co-firing power generation, or converting an entire amount of ammonia into hydrogen and then producing energy through hydrogen combustion power generation has been suggested. In this case, it is considered that it will be possible to produce energy in an environmentally friendly manner using the advantages of hydrogen, such as high calorific value and ease of ignition. In addition, energy can be produced from ammonia in an environmentally friendly manner, not only through co-firing or combustion with hydrogen, but also through the hydrogen converted from ammonia as a fuel cell. More specifically, only part or all of ammonia may be converted into hydrogen and energy corresponding to the required electricity capacity may be produced using the hydrogen thus prepared as a raw material for fuel cells. Another use of ammonia is as a fuel for ships. Similar to the previous electricity generation cases, energy for ship operation may be produced using ammonia as fuel for ships. Therefore, when only part or all of the ammonia is converted to hydrogen, the ship may be driven by co-combustion of ammonia and hydrogen, combustion of hydrogen, or energy production through combination with additional fuel cells.

Accordingly, interest in the technology for preparing hydrogen by dehydrogenating ammonia is increasing all over the world. When a high-performance catalyst for ammonia dehydrogenation is developed, it is considered that hydrogen may be prepared through such catalyst and the hydrogen thus prepared may be utilized in a variety of applications.

In general, ruthenium (Ru)-based catalysts used to prepare highly active catalysts for ammonia dehydrogenation are expensive. In addition, a problem in which catalyst deactivation is accelerated occurs when the ammonia dehydrogenation reaction temperature is high. Therefore, it is essential to develop a catalyst that has high activity even at low temperatures while minimizing the Ru content. Accordingly, currently, there is a need for the development of such a catalyst all over the world.

[Disclosure]

[Technical Problem]

It is one embodiment of the present invention to provide a catalyst for ammonia dehydrogenation capable of preparing hydrogen from ammonia at a high yield.

It is other embodiment of the present invention to provide a method of preparing the catalyst for ammonia dehydrogenation.

It is another object of the present inventio to provide a method of preparing hydrogen from ammonia using the catalyst for ammonia dehydrogenation.

[Technical Solution]

In accordance with the present disclosure, the above and other objects can be accomplished by the provision of a catalyst for ammonia dehydrogenation comprising:

a clay; and
an alkali metal and ruthenium impregnated in the clay.

The catalyst for ammonia dehydrogenation may comprise 5 parts by weight to 50 parts by weight of the alkali metal impregnated based on 100 parts by weight of the clay.

The alkali metal may comprise lithium (Li), sodium (Na), potassium (K), rubidium (Rb), cesium (Cs), francium (Fr), or a combination thereof.

The catalyst for ammonia dehydrogenation may comprise 0.5 parts by weight to 10 parts by weight of the ruthenium impregnated based on 100 parts by weight of the clay.

The catalyst for ammonia dehydrogenation may further comprise an alkaline earth metal, a lanthanide metal, or a combination thereof impregnated in the clay.

The total amount of the alkali metal, the alkaline earth metal, and the lanthanide metal impregnated may be more than 5 parts by weight and not more than 50 parts by weight based on 100 parts by weight of the clay.

The clay may comprise kaolinite, rectorite, halloysite, chrysotile, montmorillonite, bentonite, sepiolite, hectorite, laponite, beidellite, vermiculite, pyrophyllite, talc, muscovite, illite, phengite, biotite, paragonite, brittle mica, donbassite, sudoite, chamosite, smectite, chlorite, diatomaceous earth or a combination thereof.

In accordance with another aspect of the present disclosure, there is provided a method of preparing a catalyst for ammonia dehydrogenation including:

preparing a clay (S10);
impregnating an alkali metal in the clay (S20);
drying the alkali metal-impregnated clay (S30);
impregnating ruthenium in the dried clay (S40); and
drying the alkali metal- and ruthenium-impregnated clay (S50).

The method of preparing a catalyst for ammonia dehydrogenation may further comprise, after step (S50), activating by bringing the dried clay into contact with a reducing agent (S60).

The reducing agent may comprise hydrogen, ammonia, or a combination thereof.

In accordance with another aspect of the present disclosure, there is provided a method of preparing hydrogen including:

preparing hydrogen by bringing ammonia into contact with the catalyst for ammonia dehydrogenation (S100).

Step (S100) may be performed at a temperature of 300°C to 700°C.

Step (S100) may be performed at a gas hourly space velocity (GHSV) of 500 $hr^{-1}$ to 25,000 $hr^{-1}$.

[Advantageous effects]

The catalyst for ammonia dehydrogenation according to one embodiment of the present disclosure is capable of preparing hydrogen from ammonia at a high yield.

[Best mode]

Hereinafter, the catalyst for ammonia dehydrogenation according to one embodiment of the present disclosure will be described in detail.

In addition, as used herein, the term "impregnation method" refers to a method generally used to impregnate an active metal or a promoter on a carrier, and means a method of adding a solution in an amount corresponding to the volume of pore of the carrier to the carrier to impregnate the active metal and/or a promoter on the surface of the carrier. Specifically, the solution is prepared by dissolving a substance comprising a desired metal in a solvent for dissolving the substance and the amount of the solution may be greater than the pore volume depending on the solubility of the substance. When a catalyst is prepared through the impregnation method, a desired amount of metal may be easily impregnated in the carrier. However, because, in this case, the entire substance is impregnated in the carrier, only cations are not selectively impregnated. Therefore, removal of undesired anions may be required through post-treatment such as additional heat treatment.

In addition, as used herein, the term "conversion of ammonia" means a value calculated in accordance with the following Equation 1:

$$\text{Conversion of ammonia (\%) = moles of ammonia reacted / moles of ammonia supplied at a beginning stage} \times 100. \qquad \text{[Equation 1]}$$

In an embodiment, the catalyst for ammonia dehydrogenation comprises a clay, an alkali metal and a ruthenium.

The alkali metal is impregnated in the clay and is present on the inner surface and/or the outer surface of the clay.

The amount of the alkali metal impregnated may be 5 parts by weight to 50 parts by weight based on 100 parts by weight of the clay. When the amount of the alkali metal impregnated falls within the range defined above, a catalyst for ammonia dehydrogenation capable of improving the conversion of ammonia can be obtained.

In addition, the limited range of the amount of alkali metal impregnated does not vary depending on the type of clay, which was verified by numerous repeated experiments of the present inventors.

The alkali metal may comprise lithium (Li), sodium (Na), potassium (K), rubidium (Rb), cesium (Cs), francium (Fr) or a combination thereof.

The ruthenium (Ru), like the alkaline earth metal, is impregnated in the clay and is present on the inner surface and/or outer surface of the clay.

The amount of the ruthenium impregnated may be 0.5 parts by weight to 10 parts by weight based on 100 parts by weight of the clay. When the amount of the ruthenium impregnated falls within the range defined above, a catalyst for ammonia dehydrogenation capable of improving the conversion of ammonia can be obtained.

In addition, the limited range of the amount of ruthenium impregnated, like the limited range of the amount of the alkali metal impregnated, does not vary depending on the type of clay, which was verified by numerous repeated experiments of the present inventors.

In addition, the catalyst for ammonia dehydrogenation may further comprise an alkaline earth metal, a lanthanide metal, or a combination thereof, which is impregnated in the clay.

The total amount of the impregnated alkali metal, alkaline earth metal, and lanthanide metal may be more than 5 parts by weight and not more than 50 parts by weight based on 100 parts by weight of the clay. Specifically, when the catalyst for ammonia dehydrogenation further comprises an alkaline earth metal, a lanthanide metal, or a combination thereof impregnated in the clay, the total amount of the impregnated alkaline earth metal and lanthanide metal can be arbitrarily adjusted within a range capable of achieving a target conversion of ammonia. Here, the target conversion of ammonia means a conversion of ammonia that can be obtained under the condition that the total amount of the alkaline earth metal and the lanthanide metal impregnated is "0" and the amount of the alkali metal impregnated is 5 parts by weight to 50 parts by weight based on 100 parts by weight of the clay.

The clay may comprise kaolinite, rectorite, halloysite, chrysotile, montmorillonite, bentonite, sepiolite, hectorite, laponite, beidellite, vermiculite, pyrophyllite, talc, muscovite, illite, phengite, biotite, paragonite, brittle mica, donbassite, sudoite, chamosite, smectite, chlorite, diatomaceous earth or a combination thereof. However, the present disclosure is not limited thereto and other types of clays may also fall within the scope of the present disclosure.

Hereinafter, a method of preparing a catalyst for ammonia dehydrogenation according to one embodiment of the present disclosure will be described in detail.

A method of preparing the catalyst for ammonia dehydrogenation according to one embodiment of the present disclosure comprises providing a clay (S10), impregnating an alkali metal in the clay (S20), drying the alkali metal-impregnated clay (S30), impregnating ruthenium in the dried clay (S40), and drying the alkali metal- and ruthenium-impregnated clay (S50).

Steps (S20) and (S30) should be performed before steps (S40) and (S50) so that both the alkali metal and the ruthenium can be uniformly impregnated in desired amounts in the clay. When step (S40) and step (S50) are performed earlier than step (S20) and step (S30), the alkali metal cannot be uniformly impregnated in the desired amounts onto the clay.

In addition, the method of preparing the catalyst for ammonia dehydrogenation may further comprise activating by bringing the dried clay into contact with a reducing agent (S60) after step (S50). Step (S60) may be performed *in-situ* in the same reactor as step (S50).

The reducing agent may be a substance capable of reducing the catalyst for ammonia dehydrogenation (particularly, ruthenium).

For example, the reducing agent may comprise hydrogen, ammonia, or a combination thereof.

Hereinafter, the method of preparing hydrogen according to one embodiment of the present disclosure using the catalyst for ammonia dehydrogenation will be described in detail.

The method of preparing hydrogen according to one embodiment of the present disclosure may comprise preparing hydrogen by bringing ammonia into contact with the catalyst for ammonia dehydrogenation (S100).

Step (S100) may be performed at a temperature of 300 °C to 700°C.

In addition, step (S100) may be performed at a gas hourly space velocity (GHSV) of 500 $hr^{-1}$ to 25,000 $hr^{-1}$.

Hereinafter, the present disclosure will be described with reference to the following examples, but the present disclosure is not limited to the following examples.

Example 1: Preparation of catalyst for ammonia dehydrogenation

First, cesium (Cs) was impregnated in clay (bentonite) using the incipient wetness impregnation method and then dried at 80°C for 12 hours. Then, the ruthenium (Ru) was further impregnated in the cesium (Cs)-impregnated clay using the incipient wetness impregnation method and then dried at 80°C for 12 hours. As a result, a catalyst for ammonia dehydrogenation impregnated with 30 parts by weight of cesium (Cs) and 2.5 parts by weight of ruthenium (Ru) based on 100 parts by weight of the clay (bentonite) was obtained.

Example 2: Preparation of catalyst for ammonia dehydrogenation

A catalyst for ammonia dehydrogenation was prepared in the same manner as in Example 1, except that the amount of cesium (Cs) impregnated was changed. As a result, a catalyst for ammonia dehydrogenation impregnated with 5 parts by weight of cesium (Cs) and 2.5 parts by weight of ruthenium (Ru) based on 100 parts by weight of clay (bentonite) was obtained.

Example 3: Preparation of catalyst for ammonia dehydrogenation

A catalyst for ammonia dehydrogenation was prepared in the same manner as in Example 1, except that the amount of cesium (Cs) impregnated was changed. As a result, a catalyst for ammonia dehydrogenation impregnated with 50 parts by weight of cesium (Cs) and 2.5 parts by weight of ruthenium (Ru) based on 100 parts by weight of clay (bentonite) was obtained.

Example 4: Preparation of catalyst for ammonia dehydrogenation

A catalyst for ammonia dehydrogenation was prepared in the same manner as in Example 1, except that the amount of ruthenium (Ru) impregnated was changed. As a result, a catalyst for ammonia dehydrogenation impregnated with 30 parts by weight of cesium (Cs) and 0.5 parts by weight of ruthenium (Ru) based on 100 parts by weight of clay (bentonite) was obtained.

Example 5: Preparation of catalyst for ammonia dehydrogenation

A catalyst for ammonia dehydrogenation was prepared in the same manner as in Example 1, except that the amount of ruthenium (Ru) impregnated was changed. As a result, a catalyst for ammonia dehydrogenation impregnated with 30 parts by weight of cesium (Cs) and 10 parts by weight of ruthenium (Ru) based on 100 parts by weight of clay (bentonite) was obtained.

Example 6: Preparation of catalyst for ammonia dehydrogenation

A catalyst for ammonia dehydrogenation was prepared in the same manner as in Example 1, except that lithium (Li) was used instead of cesium (Cs). As a result, a catalyst for ammonia dehydrogenation impregnated with 30 parts by weight of lithium (Li) and 2.5 parts by weight of ruthenium (Ru) based on 100 parts by weight of clay (bentonite) was obtained.

Example 7: Preparation of catalyst for ammonia dehydrogenation

A catalyst for ammonia dehydrogenation was prepared in the same manner as in Example 1, except that sodium (Na) was used instead of cesium (Cs). As a result, a catalyst for ammonia dehydrogenation impregnated with 30 parts by weight of sodium (Na) and 2.5 parts by weight of ruthenium (Ru) based on 100 parts by weight of clay (bentonite) was obtained.

Example 8: Preparation of catalyst for ammonia dehydrogenation

A catalyst for ammonia dehydrogenation was prepared in the same manner as in Example 1, except that potassium (K) was used instead of cesium (Cs). As a result, a catalyst for ammonia dehydrogenation impregnated with 30 parts by weight of potassium (K) and 2.5 parts by weight of ruthenium (Ru) based on 100 parts by weight of clay (bentonite) was obtained.

Example 9: Preparation of catalyst for ammonia dehydrogenation

A catalyst for ammonia dehydrogenation was prepared in the same manner as in Example 1, except that rubidium (Rb) was used instead of cesium (Cs). As a result, a catalyst for ammonia dehydrogenation impregnated with 30 parts by weight of rubidium (Rb) and 2.5 parts by weight of ruthenium (Ru) based on 100 parts by weight of clay (bentonite) was obtained.

Example 10: Preparation of catalyst for ammonia dehydrogenation

A catalyst for ammonia dehydrogenation was prepared in the same manner as in Example 1, except that clay (kaolinite) was used instead of clay (bentonite). As a result, a catalyst for ammonia dehydrogenation impregnated with 30 parts by weight of cesium (Cs) and 2.5 parts by weight of ruthenium (Ru) based on 100 parts by weight of clay (kaolinite) was obtained.

Example 11: Preparation of catalyst for ammonia dehydrogenation

A catalyst for ammonia dehydrogenation was prepared in the same manner as in Example 1, except that clay (montmorillonite) was used instead of clay (bentonite). As a result, a catalyst for ammonia dehydrogenation impregnated with 30 parts by weight of cesium (Cs) and 2.5 parts by weight of ruthenium (Ru) based on 100 parts by weight of clay (montmorillonite) was obtained.

Example 12: Preparation of catalyst for ammonia dehydrogenation

A catalyst for ammonia dehydrogenation was prepared in the same manner as in Example 1, except that clay (Sepiolite) was used instead of clay (bentonite). As a result, a catalyst for ammonia dehydrogenation impregnated with 30 parts by weight of cesium (Cs) and 2.5 parts by weight of ruthenium (Ru) based on 100 parts by weight of clay (Sepiolite) was obtained.

Example 13: Preparation of catalyst for ammonia dehydrogenation

A catalyst for ammonia dehydrogenation was prepared in the same manner as in Example 1, except that clay (diatomaceous earth) was used instead of clay (bentonite). As a result, a catalyst for ammonia dehydrogenation impregnated with 30 parts by weight of cesium (Cs) and 2.5 parts by weight of ruthenium (Ru) based on 100 parts by weight of clay (diatomaceous earth) was obtained.

Example 14: Preparation of catalyst for ammonia dehydrogenation

A catalyst for ammonia dehydrogenation was prepared in the same manner as in Example 1, except that 20 parts by weight of cesium (Cs) and 10 parts by weight of magnesium (Mg) were used instead of 30 parts by weight of cesium (Cs). As a result, a catalyst for ammonia dehydrogenation impregnated with 20 parts by weight of cesium (Cs), 10 parts by weight of magnesium (Mg), and 2.5 parts by weight of ruthenium (Ru) based on 100 parts by weight of clay (bentonite) was obtained.

Example 15: Preparation of catalyst for ammonia dehydrogenation

A catalyst for ammonia dehydrogenation was prepared in the same manner as in Example 1, except that 20 parts by weight of cesium (Cs) and 10 parts by weight of calcium (Ca) were used instead of 30 parts by weight of cesium (Cs). As a result, a catalyst for ammonia dehydrogenation impregnated with 20 parts by weight of cesium (Cs), 10 parts by weight of calcium (Ca), and 2.5 parts by weight of ruthenium (Ru) based on 100 parts by weight of clay (bentonite) was obtained.

Example 16: Preparation of catalyst for ammonia dehydrogenation

A catalyst for ammonia dehydrogenation was prepared in the same manner as in Example 1, except that 20 parts by weight of cesium (Cs) and 10 parts by weight of strontium (Sr) were used instead of 30 parts by weight of cesium (Cs). As a result, a catalyst for ammonia dehydrogenation impregnated with 20 parts by weight of cesium (Cs), 10 parts by weight of strontium (Sr), and 2.5 parts by weight of ruthenium (Ru) based on 100 parts by weight of clay (bentonite) was obtained.

Example 17: Preparation of catalyst for ammonia dehydrogenation

A catalyst for ammonia dehydrogenation was prepared in the same manner as in Example 1, except that 20 parts by weight of cesium (Cs) and 10 parts by weight of barium (Ba) were used instead of 30 parts by weight of cesium (Cs). As a result, a catalyst for ammonia dehydrogenation impregnated with 20 parts by weight of cesium (Cs), 10 parts by weight of barium (Ba), and 2.5 parts by weight of ruthenium (Ru) based on 100 parts by weight of clay (bentonite) was obtained.

Reference Example 1: Preparation of catalyst for ammonia dehydrogenation

A catalyst for ammonia dehydrogenation was prepared in the same manner as in Example 1, except that the amount of ruthenium (Ru) impregnated was changed. As a result, a catalyst for ammonia dehydrogenation impregnated with 30 parts by weight of cesium (Cs) and 0.2 parts by weight of ruthenium (Ru) based on 100 parts by weight of clay (bentonite) was obtained.

Reference Example 2: Preparation of catalyst for ammonia dehydrogenation

A catalyst for ammonia dehydrogenation was prepared in the same manner as in Example 1, except that the amount of ruthenium (Ru) impregnated was changed. As a result, a catalyst for ammonia dehydrogenation impregnated with 30 parts by weight of cesium (Cs) and 15 parts by weight of ruthenium (Ru) based on 100 parts by weight of clay (bentonite) was obtained.

Reference Example 3: Preparation of catalyst for ammonia dehydrogenation

A catalyst for ammonia dehydrogenation was prepared in the same manner as in Example 1, except that the amount of cesium (Cs) impregnated was changed. As a result, a catalyst for ammonia dehydrogenation impregnated with 2 parts by weight of cesium (Cs) and 2.5 parts by weight of ruthenium (Ru) based on 100 parts by weight of clay (bentonite) was obtained.

Reference Example 4: Preparation of catalyst for ammonia dehydrogenation

A catalyst for ammonia dehydrogenation was prepared in the same manner as in Example 1, except that the amount of cesium (Cs) impregnated was changed. As a result, a catalyst for ammonia dehydrogenation impregnated with 60 parts by weight of cesium (Cs) and 2.5 parts by weight of ruthenium (Ru) based on 100 parts by weight of clay (bentonite) was obtained.

Reference Example 5: Preparation of catalyst for ammonia dehydrogenation

A catalyst for ammonia dehydrogenation was prepared in the same manner as in Example 1, except that cesium (Cs) was not impregnated. As a result, a catalyst for ammonia dehydrogenation impregnated with 0 parts by weight of cesium (Cs) and 2.5 parts by weight of ruthenium (Ru) based on 100 parts by weight of clay (bentonite) was obtained.

The compositions of the catalysts prepared in Examples 1 to 17 and Reference Examples 1 to 5 are summarized and shown in Tables 1 and 2 below.

[Table 1]

| | Type of clay | Clay content (parts by weight) | The amount of alkali metal impregnated (parts by weight) | | | | | The amount of ruthenium impregnated (parts by weight) |
|---|---|---|---|---|---|---|---|---|
| | | | Cs | Li | Na | K | Rb | |
| Example 1 | Bentonite | 100 | 30 | 0 | 0 | 0 | 0 | 2.5 |
| Example 2 | Bentonite | 100 | 5 | 0 | 0 | 0 | 0 | 2.5 |
| Example 3 | Bentonite | 100 | 50 | 0 | 0 | 0 | 0 | 2.5 |
| Example 4 | Bentonite | 100 | 30 | 0 | 0 | 0 | 0 | 0.5 |
| Example 5 | Bentonite | 100 | 30 | 0 | 0 | 0 | 0 | 10 |
| Example 6 | Bentonite | 100 | 0 | 30 | 0 | 0 | 0 | 2.5 |
| Example 7 | Bentonite | 100 | 0 | 0 | 30 | 0 | 0 | 2.5 |
| Example 8 | Bentonite | 100 | 0 | 0 | 0 | 30 | 0 | 2.5 |
| Example 9 | Bentonite | 100 | 0 | 0 | 0 | 0 | 30 | 2.5 |
| Example 10 | Kaolinite | 100 | 30 | 0 | 0 | 0 | 0 | 2.5 |
| Example 11 | Montmoril lonite | 100 | 30 | 0 | 0 | 0 | 0 | 2.5 |
| Example 12 | Sepiolite | 100 | 30 | 0 | 0 | 0 | 0 | 2.5 |
| Example 13 | Diatomace ous earth | 100 | 30 | 0 | 0 | 0 | 0 | 2.5 |
| Reference Example 1 | Bentonite | 100 | 30 | 0 | 0 | 0 | 0 | 0.2 |
| Reference Example 2 | Bentonite | 100 | 30 | 0 | 0 | 0 | 0 | 15 |
| Reference Example 3 | Bentonite | 100 | 2 | 0 | 0 | 0 | 0 | 2.5 |
| Reference Example 4 | Bentonite | 100 | 60 | 0 | 0 | 0 | 0 | 2.5 |
| Reference Example 5 | Bentonite | 100 | 0 | 0 | 0 | 0 | 0 | 2.5 |

[Table 2]

| | Type of clay | Clay content (parts by weight) | The amount of alkali metal impregnated (parts by weight) | | | | | Amount of ruthenium impregnated (parts by weight) |
|---|---|---|---|---|---|---|---|---|
| | | | Cs | Mg | Ca | Sr | Ba | |
| Example 14 | Bentonite | 100 | 20 | 10 | 0 | 0 | 0 | 2.5 |
| Example 15 | Bentonite | 100 | 20 | 0 | 10 | 0 | 0 | 2.5 |
| Example 16 | Bentonite | 100 | 20 | 0 | 0 | 10 | 0 | 2.5 |
| Example 17 | Bentonite | 100 | 20 | 0 | 0 | 0 | 10 | 0.5 |

Test Example 1: Test for conversion of ammonia

The catalysts prepared in Examples 1 to 17 and Reference Examples 1 to 5 were activated by *in-situ* hydrogen treatment. Then, 100% ammonia gas was brought into contact with each catalyst under the conditions of atmospheric pressure (1 atm), 450°C, and a gas hourly space velocity (GHSV) of 12,000 hr$^{-1}$, and then the conversion of ammonia was evaluated in accordance with Equation 1, and the results are shown in Table 3 below.

[Table 3]

| | Example | | | | | | | | |
|---|---|---|---|---|---|---|---|---|---|
| | 1 | 2 | 3 | 4 | 5 | 6 | 7 | 8 | 9 |
| Convers ion of ammonia (%) | 94.8 | 74.0 | 83.1 | 71.1 | 86.6 | 76.3 | 82.3 | 88.4 | 92.1 |

| | Example | | | | | | | |
|---|---|---|---|---|---|---|---|---|
| | 10 | 11 | 12 | 13 | 14 | 15 | 16 | 17 |
| Convers ion of ammonia (%) | 89.3 | 91.6 | 93.7 | 94.1 | 85.3 | 86.2 | 88.0 | 89.8 |

| | Reference Example | | | | |
|---|---|---|---|---|---|
| | 1 | 2 | 3 | 4 | 5 |
| Convers ion of ammonia (%) | 21.8 | 59.7 | 51.6 | 55.4 | 32.9 |

As can be seen from Table 3, the catalysts prepared in Examples 1 to 17 had higher conversion of ammonia than those of the catalysts prepared in Reference Examples 1 to 5.

In addition, according to the present disclosure, a catalyst for ammonia dehydrogenation was prepared by impregnating only cesium (Cs), lithium (Li), sodium (Na), potassium (K), or rubidium (Rb) as an alkali metal and the activity (i.e., conversion of ammonia) of the ammonia dehydrogenation catalyst thus prepared was measured. However, since all alkali metals have substantially the same characteristics, although a catalyst for ammonia dehydrogenation is prepared by impregnating other alkali metals, for example, a combination of two or more of cesium (Cs), lithium (Li), sodium (Na), potassium (K), and rubidium (Rb), substantially the same results as the data shown in Tables 1, 2 and 3 above can be obtained, which is obvious to those skilled in the art.

Although the preferred embodiments of the present disclosure have been disclosed for illustrative purposes, those skilled in the art will appreciate that various modifications, additions and substitutions are possible, without departing from the scope and spirit of the disclosure as disclosed in the accompanying claims. Accordingly, the scope of the present disclosure should be defined by the appended claims.

**Claims**

1. A catalyst for ammonia dehydrogenation comprising:

   a clay; and
   an alkali metal and ruthenium impregnated in the clay.

2. The catalyst for ammonia dehydrogenation according to claim 1, wherein the catalyst for ammonia dehydrogenation comprises 5 parts by weight to 50 parts by weight of the alkali metal impregnated based on 100 parts by weight of the clay.

3. The catalyst for ammonia dehydrogenation according to claim 1, wherein the alkali metal comprises lithium (Li), sodium (Na), potassium (K), rubidium (Rb), cesium (Cs), francium (Fr), or a combination thereof.

4. The catalyst for ammonia dehydrogenation according to claim 1, wherein the catalyst for ammonia dehydrogenation comprises 0.5 parts by weight to 10 parts by weight of the ruthenium impregnated based on 100 parts by weight of the clay.

5. The catalyst for ammonia dehydrogenation according to claim 1, further comprising an alkaline earth metal, a lanthanide metal, or a combination thereof impregnated in the clay.

6. The catalyst for ammonia dehydrogenation according to claim 5, wherein a total amount of the alkali metal, the alkaline earth metal, and the lanthanide metal impregnated is more than 5 parts by weight and not more than 50 parts by weight based on 100 parts by weight of the clay.

7. The catalyst for ammonia dehydrogenation according to claim 1, wherein the clay comprises kaolinite, rectorite, halloysite, chrysotile, montmorillonite, bentonite, sepiolite, hectorite, laponite, beidellite, vermiculite, pyrophyllite, talc, muscovite, illite, phengite, biotite, paragonite, brittle mica, donbassite, sudoite, chamosite, smectite, chlorite, diatomaceous earth or a combination thereof.

8.  A method of preparing a catalyst for ammonia dehydrogenation comprising:

    preparing a clay (S10);
    impregnating an alkali metal in the clay (S20);
    drying the alkali metal-impregnated clay (S30);
    impregnating ruthenium in the dried clay (S40); and
    drying the alkali metal- and ruthenium-impregnated clay (S50).

9.  The method according to claim 8, further comprising, after step (S50), activating by bringing the dried clay into contact with a reducing agent (S60).

10. The method according to claim 9, wherein the reducing agent comprises hydrogen, ammonia, or a combination thereof.

11. A method of preparing hydrogen comprising:
    preparing hydrogen by bringing ammonia into contact with the catalyst according to any one of claims 1 to 7 for ammonia dehydrogenation (S100).

12. The method according to claim 11, wherein step (S100) is performed at a temperature of 300°C to 700°C.

13. The method according to claim 11, wherein step (S100) is performed at a gas hourly space velocity (GHSV) of 500 hr$^{-1}$ to 25,000 hr$^{-1}$.

## INTERNATIONAL SEARCH REPORT

| International application No. |
| --- |
| **PCT/KR2023/013894** |

| A. | CLASSIFICATION OF SUBJECT MATTER |
| --- | --- |

**B01J 21/16**(2006.01)i; **B01J 23/04**(2006.01)i; **B01J 23/46**(2006.01)i; **B01J 37/02**(2006.01)i; **B01J 37/16**(2006.01)i; **C01B 3/04**(2006.01)i

According to International Patent Classification (IPC) or to both national classification and IPC

| B. | FIELDS SEARCHED |
| --- | --- |

Minimum documentation searched (classification system followed by classification symbols)

B01J 21/16(2006.01); B01J 21/00(2006.01); B01J 23/00(2006.01); B01J 23/04(2006.01); B01J 23/38(2006.01); B01J 23/46(2006.01); B01J 23/58(2006.01); B01J 29/06(2006.01); B01J 29/068(2006.01); B01J 37/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 암모니아(ammonia), 탈수소(dehydrogenation), 촉매(catalyst), 수소 (hydrogen), 루테늄(ruthenium), 클레이(clay)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2021-0052938 A (WONIK MATERIALS CO., LTD.) 11 May 2021 (2021-05-11)<br>See claim 1; paragraphs [0054]-[0100]; manufacturing example 1; and examples 1-1 and 1-3. | 1-13 |
| Y | LE, T. A. et al. A review on the recent developments of ruthenium and nickel catalysts for COx-free H2 generation by ammonia decomposition. Korean J. Chem. Eng. 2021, vol. 38, no. 6, pp. 1087-1103.<br>See page 1091; and table 3. | 1-13 |
| Y | KR 10-2020-0076404 A (KOREA INSTITUTE OF SCIENCE AND TECHNOLOGY) 29 June 2020 (2020-06-29)<br>See paragraph [0088]; example 1; and experimental example 1. | 9-10,13 |
| A | KR 10-1168203 B1 (HEADWATERS TECHNOLOGY INNOVATION LLC) 25 July 2012 (2012-07-25)<br>See entire document. | 1-13 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 December 2023** | **18 December 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2023/013894** |

### C. DOCUMENTS CONSIDERED TO BE RELEVANT

| Category* | Citation of document, with indication, where appropriate, of the relevant passages | Relevant to claim No. |
|---|---|---|
| A | KR 10-2019-0087810 A (KOREA INSTITUTE OF SCIENCE AND TECHNOLOGY) 25 July 2019 (2019-07-25)<br>　　See entire document. | 1-13 |
| PX | KR 10-2556888 B1 (HD HYUNDAI OILBANK CO., LTD.) 18 July 2023 (2023-07-18)<br>　　See entire document.<br>　　※ Published patent of a priority application of the present PCT application. | 1-13 |

Form PCT/ISA/210 (second sheet) (July 2022)

**INTERNATIONAL SEARCH REPORT**
Information on patent family members

International application No.

**PCT/KR2023/013894**

| Patent document cited in search report | | | Publication date (day/month/year) | Patent family member(s) | | | Publication date (day/month/year) |
|---|---|---|---|---|---|---|---|
| KR | 10-2021-0052938 | A | 11 May 2021 | KR | 10-2304406 | B1 | 23 September 2021 |
| KR | 10-2020-0076404 | A | 29 June 2020 | KR | 10-2241516 | B1 | 19 April 2021 |
| KR | 10-1168203 | B1 | 25 July 2012 | AU | 2005-325150 | A1 | 27 July 2006 |
| | | | | BR | PI0412538 | A | 19 September 2006 |
| | | | | BR | PI0517783 | A | 21 October 2008 |
| | | | | BR | PI0519002 | A2 | 23 December 2008 |
| | | | | CA | 2532166 | A1 | 03 February 2005 |
| | | | | CA | 2532166 | C | 29 May 2012 |
| | | | | CA | 2579785 | A1 | 04 January 2007 |
| | | | | CA | 2594019 | A1 | 27 July 2006 |
| | | | | CN | 101132858 | A | 27 February 2008 |
| | | | | CN | 101160376 | A | 09 April 2008 |
| | | | | CN | 1822901 | A | 23 August 2006 |
| | | | | CN | 1822901 | B | 08 June 2011 |
| | | | | EP | 1644114 | A2 | 12 April 2006 |
| | | | | EP | 1812158 | A2 | 01 August 2007 |
| | | | | EP | 1812158 | A4 | 24 November 2010 |
| | | | | EP | 1836278 | A2 | 26 September 2007 |
| | | | | EP | 1836278 | A4 | 01 June 2011 |
| | | | | EP | 2684603 | A1 | 15 January 2014 |
| | | | | HK | 1093935 | A1 | 16 March 2007 |
| | | | | JP | 2007-530248 | A | 01 November 2007 |
| | | | | JP | 2008-520836 | A | 19 June 2008 |
| | | | | JP | 2008-526504 | A | 24 July 2008 |
| | | | | KR | 10-2007-0062548 | A | 15 June 2007 |
| | | | | KR | 10-2007-0085632 | A | 27 August 2007 |
| | | | | MX | 2007005836 | A | 20 July 2007 |
| | | | | MX | 2007008415 | A | 06 September 2007 |
| | | | | US | 2005-0014635 | A1 | 20 January 2005 |
| | | | | US | 2005-0014636 | A1 | 20 January 2005 |
| | | | | US | 2006-0102521 | A1 | 18 May 2006 |
| | | | | US | 2006-0105910 | A1 | 18 May 2006 |
| | | | | US | 2006-0116286 | A1 | 01 June 2006 |
| | | | | US | 2006-0160695 | A1 | 20 July 2006 |
| | | | | US | 2006-0243641 | A1 | 02 November 2006 |
| | | | | US | 2009-0298684 | A1 | 03 December 2009 |
| | | | | US | 7011807 | B2 | 14 March 2006 |
| | | | | US | 7045479 | B2 | 16 May 2006 |
| | | | | US | 7449423 | B2 | 11 November 2008 |
| | | | | US | 7569508 | B2 | 04 August 2009 |
| | | | | US | 7632775 | B2 | 15 December 2009 |
| | | | | US | 7655137 | B2 | 02 February 2010 |
| | | | | US | 7709411 | B2 | 04 May 2010 |
| | | | | WO | 2005-009611 | A2 | 03 February 2005 |
| | | | | WO | 2005-009611 | A3 | 17 March 2005 |
| | | | | WO | 2006-078352 | A2 | 27 July 2006 |
| | | | | WO | 2006-078352 | A3 | 25 October 2007 |
| | | | | WO | 2006-110301 | A2 | 19 October 2006 |
| | | | | WO | 2006-110301 | A3 | 01 February 2007 |
| | | | | WO | 2007-001418 | A2 | 04 January 2007 |

Form PCT/ISA/210 (patent family annex) (July 2022)

## INTERNATIONAL SEARCH REPORT
### Information on patent family members

International application No.

**PCT/KR2023/013894**

| Patent document cited in search report | | | Publication date (day/month/year) | Patent family member(s) | | | Publication date (day/month/year) |
|---|---|---|---|---|---|---|---|
| | | | | WO | 2007-001418 | A3 | 18 May 2007 |
| KR | 10-2019-0087810 | A | 25 July 2019 | KR | 10-2104237 | B1 | 24 April 2020 |
| KR | 10-2556888 | B1 | 18 July 2023 | | None | | |

Form PCT/ISA/210 (patent family annex) (July 2022)